# EUROPEAN PATENT APPLICATION

(11) **EP 2 926 964 A1**
(43) Date of publication of application: **07.10.2015**
(21) Application number: 13858854.6
(22) Date of filing: 29.11.2013
(51) Int. Cl.: B27G 13/12

(54) **FORMED CUTTER AND FORMED TOOL FOR WOOD**

(30) Priority: 29.11.2012 JP 2012261178
(71) Applicant: Kyocera Corporation, Kyoto-shi, Kyoto 612-8501 (JP)
(72) Inventor: KINOSHITA,Hideyoshi, Kyoto-shi Kyoto 612-8501 (JP)
(74) Representative: Viering, Jentschura & Partner Patent- und Rechtsanwälte
(86) International application number: PCT/JP2013/082296
(87) International publication number: WO 2014/084389

(57) **Abstract**

Problem: To provide a formed cutter having high fracture resistance, wear resistance and corrosion resistance although being lightweight, and a formed tool for wood which is configured by attaching a plurality of formed cutters to a rotary holder.

Solution: A formed cutter is configured from a base (2a) and a cutting edge portion (2b), the base (2a) and the cutting edge portion (2b) constituting a one-piece plate-shaped body and being formed from cermet having a hard phase and a binding phase. A formed tool for wood is configured by attaching a plurality of formed cutters to a rotary holder.

## Description

### TECHNICAL FIELD

The present invention relates to a formed cutter which is, for example, used for cut processing for wood and a formed tool for wood which is configured by attaching the formed cutter.

### BACKGROUND

To improve processing efficiency to cut out a required shape in a single cutting in a workpiece made of wood, a formed tool for wood configured by attaching a plurality of formed cutters, which include cutting edge portions following the cut-out shape, to a rotary holder is used. The formed tool for wood is used at rotational frequencies of 5000 to 15000 rpm and cemented carbide alloys or SKH material (high-speed steel) are used as the material of the formed cutter (for example, Patent Document 1).

### PRIOR ART DOCUMENT

### Patent Document

Patent Document 1: WO2009/131159

### SUMMARY OF THE INVENTION

### Problems to be Solved by the Invention

Workpieces made of wood cover a wide range such as various types of raw wood or scrap wood and since there are concerns that, as a result of processing medium density fiberboard (MDF) material (referring to a fiberboard with a density of 0.35 to 0.80 g/cm³ out of fiberboards which include plant fibers such as wood as a raw material and which are manufactured by dry processing) which contains a large quantity of adhesives or a wild tree which contains a large quantity of moisture, a cutting edge portion in a formed cutter will be corroded leading to chipping or will be abraded due to chipping, there is a demand for a formed cutter able to be used for long periods.

In addition, when further increasing the rotational frequency in order to improve the processing efficiency and to improve the characteristics of a machined surface by reducing tears in the machined surface, since the driving force applied to the rotation is increased, there is a demand to reduce the weight of the plurality of attached formed cutters.

The present invention is created in order to satisfy the demand described above and an object of the present invention is to provide a formed cutter having high fracture resistance, wear resistance and corrosion resistance although being lightweight, and a formed tool for wood which is configured by attaching a plurality of formed cutters to a rotary holder.

### Means to Solve the Problem

A formed cutter of the present invention is a one-piece plate-shaped body including a cutting edge portion and the plate-shaped body is formed from cermet having a hard phase and a binding phase.

In addition, a formed tool for wood of the present invention is configured by attaching a plurality of the formed cutters described above to a rotary holder.

### EFFECT OF THE INVENTION

Since the formed cutter of the present invention has high fracture resistance, wear resistance and corrosion resistance although being lightweight, it is possible to withstand usage for long periods.

According to the formed tool for wood of the present invention, since it is possible to increase the rotational frequency without requiring a large driving force, it is possible to increase processing efficiency. In addition, since tears in a machined surface are eliminated since it is possible to carry out cutting at a high rotational frequency, it is possible to obtain favorable machined surface characteristics for long periods.

### BRIEF DESCRIPTION OF THE DRAWINGS

FIG. 1 is a front view illustrating an example of a formed tool for wood of the present embodiment.
FIG. 2 is a front view illustrating an example of a formed cutter of the present embodiment.
FIG. 3 is a scanning electron microscope photograph of a cross-section illustrating an example of cermet which configures the formed cutter of the present embodiment.
FIG. 4 is a schematic diagram of an example of cermet which configures the formed cutter of the present embodiment.
FIG. 5A is a scanning electron microscope photograph of a cross-section in a vicinity of a surface in an example of cermet which configures the formed cutter of the present embodiment.
FIG. 5B is a scanning electron microscope photograph of a cross-section in an internal portion in an example of cermet which configures the formed cutter of the present embodiment.
FIG. 5C is a diagram illustrating distribution of Vickers hardness in the vicinity of the surface of an example of cermet which configures the formed cutter of the present embodiment.
FIG. 6A is a scanning electron microscope photograph where a part of the cermet in FIG. 5A is enlarged.
FIG. 6B is a diagram of Co distribution in FIG. 6A according to wavelength dispersive X-ray spectrometry (WDS).
FIG. 6C is a diagram of N (nitrogen) distribution in FIG. 6A according to wavelength dispersive X-ray spectrometry (WDS).
FIG. 7 is electron beam backscattering diffraction (EBSD) data in a part of FIG. 6A.

### BEST MODE FOR CARRYING OUT THE INVENTION

Description will be given below of a formed tool for wood of the present embodiment.

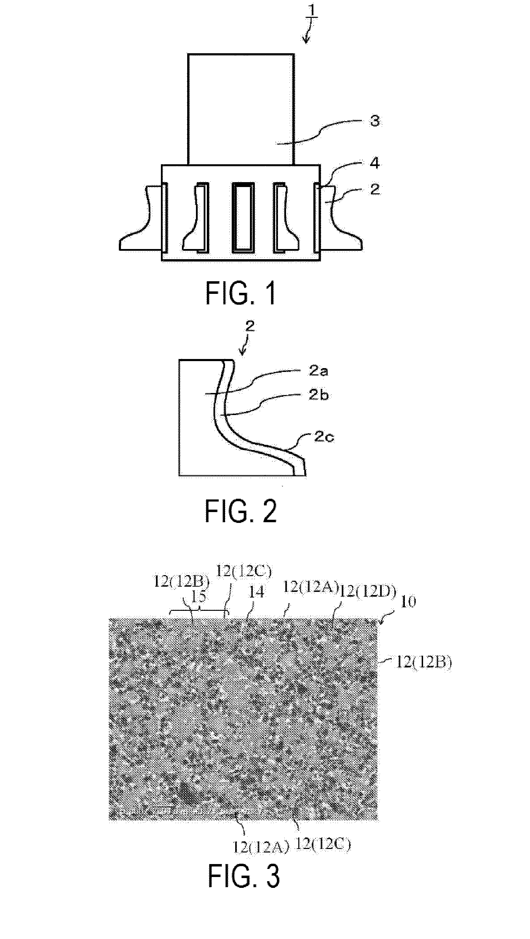

FIG. 1 is a front view illustrating an example of the formed tool for wood of the present embodiment and FIG. 2 is a front view illustrating an example of the formed cutter of the present embodiment.

A formed tool for wood 1 illustrated in FIG. 1 is configured by attaching a plurality of formed cutters 2 to a rotary holder 3, and the formed cutters 2 are attached by being inserted into attachment ports 4 provided in the rotary holder 3.

The formed cutter 2 is configured from a base 2a and a cutting edge portion 2b, and the shape of the cutting edge portion 2b in contact with the workpiece made of wood has a curved portion in FIG. 2. Here, the formed cutter 2 is not configured by bonding the cutting edge portion 2b to the base 2a by brazing or the like, but is configured from a one-piece plate-shaped body, and the cutting edge portion 2b is a site which includes a blade edge 2c and where sharpening is carried out.

In addition, the material of the plate-shaped body which configures the formed cutter 2 is formed from cermet having a hard phase and a binding phase. Here, the cermet in the present invention is defined as cermet where, in the hard phase, the ratio of cubic which contain TiC, TiN, or TiCN is the highest area ratio in the structure. That is, a cemented carbide alloy in which tungsten carbide (WC) content forms the greatest part is not included in the cermet of the present invention. Here, needless to say, the formed cutter 2 of the present embodiment is not limited to the shape illustrated in the diagrams.

In the formed cutter 2 of the present embodiment, the base 2 a and the cutting edge portion 2b following the cut-out shape of the workpiece made of wood are a one-piece plate-shaped body and are not bonded by brazing or the like, thus there is no concern that the cutting edge portion 2b will be peeled from the base 2a even at high rotational frequencies. In addition, since the formed cutter 2 is formed from cermet having a hard phase and a binding phase, the formed cutter 2 is provided with high fracture resistance, corrosion resistance, and wear resistance, and there is little chipping or wear caused by chipping even when processing MDF material which contains a large quantity of adhesives or a wild tree which contains a large quantity of moisture. Furthermore, since the specific gravity of the cermet is lighter than a cemented carbide alloy or a high-speed steel (SKH material), it is possible to increase the rotational frequency of the formed tool for wood 1 and it is possible to improve the processing efficiency and make the machined surface characteristics favorable by reducing tears in the machined surface. In detail, it is possible to handle rotational frequencies of 18000 rpm or greater.

In addition, as specific dimensions of the formed cutter 2, for example, the thickness is from 1.5 to 3.5 mm and the outer dimensions are from 15 to 60 mm x from 15 to 60 mm when regarded as a rectangular shape. In addition, with regard to the mass ratio of the hard phase and the binding phase in the cermet which configures the formed cutter 2, the hard phase is from 70 to 95 mass% and the binding phase is from 5 to 30 mass%. Then, as the static property of the cermet, the specific gravity is 8.0 g/cm³ or less, the fracture toughness K_{IC} is 8.5 MPa·m^{1/2} or greater, and a Vickers hardness Hv in an internal portion of the cermet is 1500 or greater.

The fracture toughness K_{IC} may be determined on the basis of JISR 1607 (1955). In addition, the Vickers hardness may be determined on the basis of JISR 1610 (2003).

Here, in the present invention, an internal portion of the cermet refers to a region which is 100 µm or greater inside from the surface of the cermet.

### (First Embodiment)

As the cermet which configures the formed cutter 2, Ti-based cermet where the mass content ratio of Ti is the highest out of the metals is used. At this time, in the present embodiment, Co and Ni are included as the binding phase and the content ratio of Ni with respect to the content of Co and Ni is from 25 to 45 mass%. Since high corrosion resistance and wear resistance are combined in this range, it is possible for the formed cutter 2 to carry out cut processing for long periods even on MDF material which contains a large quantity of adhesives or a wild tree which contains a large quantity of moisture.

Here, the content ratio of Ni with respect to the content of Co and Ni may be determined by grinding a part of the formed cutter 2, measuring the Co and Ni using an ICP emission spectrophotometric analyzer (manufactured by Shimadzu Corporation: ICPS-8100) after dissolving the obtained powder in hydrochloric acid, and dividing the content of Ni by the sum of the content of Co and Ni.

In addition, according to the formed cutter 2 of the present embodiment, the content ratio of Ni with respect to the content of Co and Ni in the cutting edge portion 2b is higher in the surface than in the inner portion. Due to this, it is possible to further eliminate chipping when carrying out cut processing on MDF material which contains a large quantity of adhesives or a wild tree which contains a large quantity of moisture and it is possible to further improve the corrosion resistance of the cutting edge portion 2b in contact with the MDF material which contains a large quantity of adhesives or a wild tree which contains a large quantity of moisture.

Here, the surface of the cutting edge portion 2b is a surface which forms the outside of the cutting edge portion 2b and the inner portion in the cutting edge portion 2b refers to a region 100 µm or greater inside from the surface. In addition, with regard to the content ratio of Ni in the cutting edge portion 2b, it is sufficient to compare count values obtained by an attached energy dispersive X-ray analyzer (EDS) after preparing samples of which the surface and the inner portion are able to be observed and observing the samples using a scanning electron microscope (SEM). Here, it is considered that there is significant difference in a case where there is a 10% or greater difference in the obtained count values.

### (Second Embodiment)

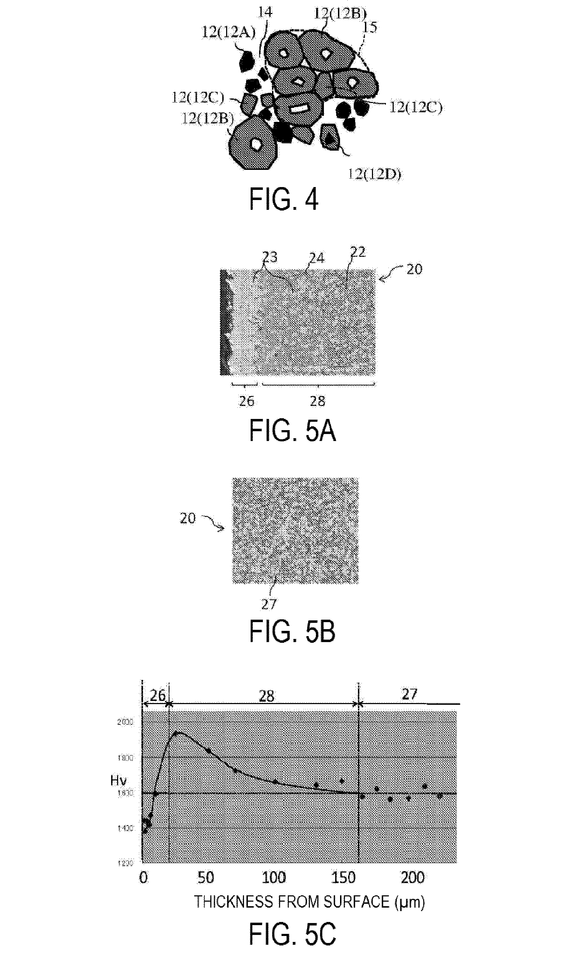

Description will be given of a second embodiment of the cermet which configures the formed cutter 2 based on the scanning electron microscope (SEM) photograph of the cross-section of the cermet in FIG. 3 and the schematic diagram in FIG. 4.

A cermet 10 in FIG. 3 is formed from a binding phase (white in the photograph in FIG. 3) 14 which has at least one type of Co and Ni as the main part, and a hard phase 12 formed from a carbonitride of one or more types out of metals of groups IV, V, and VI of the periodic table, the hard phase 12 contains a first hard phase 12A (black in the photograph in FIG. 3) formed from TiCN, and a second hard phase 12B (the center portion is a gray close to white and the outer peripheral portion is gray in the photograph in FIG. 3) formed from a composite carbonitride of Ti and one or more types out of metals of groups IV, V, and VI of the periodic table other than Ti and where the content ratio of W in the center portion is greater than the content ratio of W in the outer peripheral portion.

The average grain size of the first hard phase 12A is from 0.05 to 1 µm, and the average grain size of the second hard phase 12B is from 0.2 to 3 µm and larger than the average grain size of the first hard phase 12A. Furthermore, the second hard phase 12B forms an aggregated portion 15 formed with a grain size three times or greater the average grain size of the second hard phase 12B, and the aggregated portion 15 is present at a ratio of 20 to 60 area% in the structure of the cermet 10. In addition, the content ratio of carbon in the cermet 10 is from 6.00 to 6.50 mass%.

According to the configuration described above, the fracture resistance of the cermet 10 is improved. That is, since the content ratio of carbon in the cermet 10 is from 6.00 to 6.50 mass%, which is low compared to the conventional art, the characteristics of high hardness carbide are not easily exhibited, and the toughness of the cermet 10 is improved. Therefore, it is possible to eliminate chipping in the blade edge 2c in the sharpening of the cutting edge portion 2b, and it is possible to form a sharp blade edge. As a result, when carrying out cut processing for wood with a formed tool provided with a formed cutter, the machined surface of the wood is smooth, and it is also possible to eliminate the generation of tears.

In addition, the average grain size of the first hard phase 12A is from 0.05 to 1 µm, and it is possible to eliminate decreases in the hardness of the cermet 10 by carrying out the dispersing with this grain size. As a result, the fracture resistance is improved without decreasing the wear resistance of the cermet 10. On the other hand, since the second hard phase 12B is formed from a composite carbonitride of Ti and one or more types out of metals of groups IV, V, and VI of the periodic table other than Ti, and the content ratio of W in the center portion is greater than the content ratio of W in the outer peripheral portion, the toughness of the second hard phase 12B is high. In addition, the second hard phase 12B is independent from the first hard phase 12A, and the aggregated portion 15 which is greater than a predetermined size is present in the structure of the cermet 10 at a ratio of 20 to 60 area%.

Due to this, the aggregated portion 15 has an effect of preventing the promotion of cracks. That is, there is an interface between a cored portion and a peripheral portion in the aggregated portion 15 and cracks are not promoted in this interface as with cored structure grains including a black cored portion formed from TiCN and a gray peripheral portion formed from a composite carbonitride of Ti and W or the like. In addition, the aggregated portion 15 has a powerful effect of weakening crack-promoting energy by promoting cracking in a complicated manner compared to a hard phase formed of a simple uniform structure. Thus, it is possible to achieve a sharp state by eliminating chipping in the blade edge 2c.

Furthermore, since the second hard phase has excellent toughness, it is possible to further improve the fracture resistance of the cermet 10. Here, in a case where the hard phase 12 is formed from a composite carbonitride of Ti and one or more types out of metals of groups IV, V, and VI of the periodic table other than Ti, in order to distinguish between the second hard phase 12B where the content ratio of W in the center portion is greater than the content ratio of W in an outer peripheral portion, a third hard phase 12C where the content ratio of W in a center portion is identical to the content ratio of W in an outer peripheral portion, and a fourth hard phase 12D where the center portion is formed from TiCN, it is possible to confirm the state of the W element distribution in the hard phase with an electron probe microanalyser (EPMA) or by Auger analysis. It is also possible to confirm the first hard phase 12A using an electron probe microanalyser (EPMA).

Here, in the present embodiment, the second hard phase 12B forms the aggregated portion 15 independently of the first hard phase 12A as illustrated in FIG. 4. In other words, although the second hard phase 12B is present in the aggregated portion 15, the first hard phase 12A is not present.

Here, when the average grain size of the first hard phase 12A is 0.05 µm or greater, the dispersion state in the cermet 10 is favorable without the first hard phase 12A aggregating and the hardness of the cermet 10 is high. In addition, when the average grain size of the first hard phase 12A is 1 µm or less, the hardness of the cermet 10 is high. Furthermore, the toughness of the cermet 10 is high when the average grain size of the second hard phase 12B is 0.2 µm or greater and the average grain size of the first hard phase 12A or greater, and the hardness of the cermet 10 is high when the average grain size of the second hard phase 12B is 3 µm or less. Furthermore, the fracture resistance of the cermet 10 is high when the second hard phase 12B forms the aggregated portion 15 formed with a grain size three times or greater the average grain size of the second hard phase 12B independently of the first hard phase 12A and the aggregated portion 15 formed with a grain size three times or greater the average grain size of the second hard phase 12B is present in a structure of the cermet 10 at a ratio of 20 to 60 area%. A desirable range of the area ratio of the aggregated portion 15 is from 30 to 50 area%. Here, there are also cases where the second hard phases 12B are individually present. In addition, there are also cases where an aggregated portion formed with a grain size which is less than three times the average grain size of the second hard phase 12B is present; however, this is not equivalent to the aggregated portion 15.

In addition, the hardness of the cermet 10 is high when the content ratio of carbon in the cermet 10 is 6.00 mass% or greater and the fracture resistance of the cermet 10 is high when the content ratio of carbon in the cermet 10 is 6.50 mass% or less.

Here, in the aggregated portion 15, a third hard phase which is formed of a composite carbonitride of Ti and one or more types out of metals of groups IV, V, and VI of the periodic table other than Ti and where the content ratio of W in the center portion is identical to the content ratio of W in the outer peripheral portion may be present along with the second hard phase where the content ratio of W in the center portion is greater than the content ratio of W in the outer peripheral portion. The area ratio of the third hard phase 12C present in the cermet 10 is from 0 to 40 area% in the structure of the cermet 10.

In addition, in a portion other than the aggregated portion 15, a fourth hard phase formed of a cored portion formed from TiCN and a peripheral portion formed from a composite carbonitride of Ti and one or more types out of metals of groups IV, V, and VI of the periodic table other than Ti may be present. The area ratio of the fourth hard phase 12D present in the cermet 10 is from 0 to 30 area% in the structure of the cermet 10.

Furthermore, in the present embodiment, when the area ratio taken up by the first hard phase 12A in the cermet 10 is SA and the area ratio taken up by the second hard phase 12B is SB, the ratio of SA and SB (SB/SA) is from 1.0 to 2.5. In this range, it is possible to improve the fracture resistance without decreasing the wear resistance of the cermet 10.

In addition, in the present embodiment, when the average grain size of the first hard phase 12A in the cermet 10 is d_{A} and the average grain size of the second hard phase 12B is d_{B}, the ratio (d_{B}/d_{A}) is from 3.0 to 10. Due to this, there is an effect of improving the wear resistance of the cermet 10.

Here, the grain size of the hard phase 12 in the present invention is measured according to the method for measuring the average grain size of a cemented carbide alloy set out in CIS-019D-2005. At this time, in a case where the hard phase 12 is formed with a cored structure, measurement is carried out by setting up to an outer edge of a peripheral portion, which includes the cored portion and the peripheral portion, as one of the hard phases 12.

Here, in the present embodiment, the cermet 10 contains the hard phase 12 as from 70 to 95 area% and the binding phase as from 5 to 30 area%. In other words, the total content of one of nitride and carbonitride of metals of groups IV, V, and VI of the periodic table which include Ti forming the hard phase 12 as a main component is from 70 to 90 mass%, in particular, from 80 to 90 mass% from the viewpoint of improving wear resistance. On the other hand, by the content of the binding phase 14 being from 10 to 30 mass%, the balance between the hardness and toughness of the cermet 10 is excellent. A desirable range of the binding phase is from 10 to 25 mass%. With regard to the ratio of each metal element with respect to the total amount of metal elements in the cermet 10 in the present embodiment, Ti is from 40 to 70 mass%, W is from 10 to 30 mass%, Nb is from 0 to 20 mass%, Mo is from 0 to 10 mass%, Ta is from 0 to 10 mass%, V is from 0 to 5 mass%, Zr is from 0 to 5 mass%, Co is from 5 to 15 mass%, and Ni is from 5 to 15 mass%. In this compositional range, the cermet 10 has high wear resistance and fracture resistance.

### (Third Embodiment)

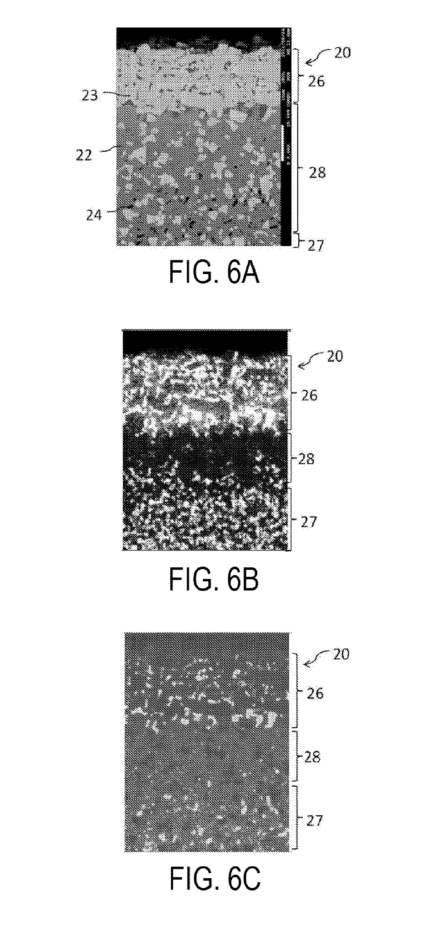

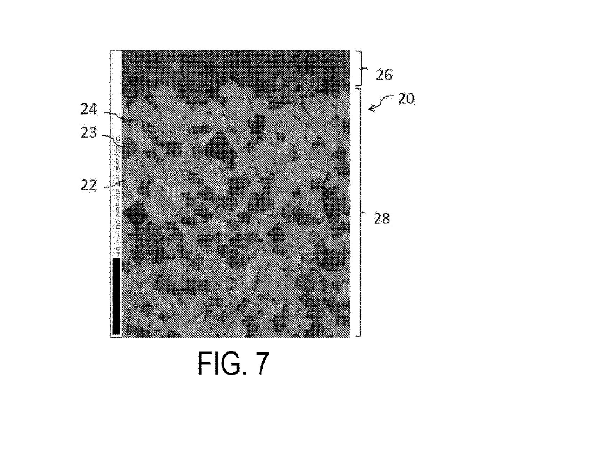

Description will be given of a third embodiment of cermet which configures the formed cutter 2 based on the scanning electron microscope photograph of a cross-section in the vicinity of the surface in FIG. 5A, the scanning electron microscope photograph of a cross-section in the internal portion in FIG. 5B, a diagram illustrating the Vickers hardness Hv in the vicinity of the surface in FIG. 5C, the scanning electron microscope photograph in FIG. 6A which is in a part in the vicinity of a surface of cermet in FIG. 5A, the diagram of the Co distribution according to wavelength dispersive X-ray spectrometry (WDS) in FIG. 6B, the diagram of the N (nitrogen) distribution according to wavelength dispersive X-ray spectrometry (WDS) in FIG. 6C, and FIG. 7 which is electron beam backscattering diffraction (EBSD) data in the vicinity of the surface of a cermet 20 in FIG. 5A and FIG. 6A.

The cermet 20 in FIG. 5A to FIG. 5C contains a hard phase formed from a TiCN phase and cubic crystals which include Ti and other metal elements in a range of 40 to 60 volume%, a WC phase as another hard phase in a range of 30 to 50 volume%, and a binding phase in a range of 8 to 15 volume%. In addition, the composition of the cermet 20 is formed from a total composition with a ratio which contains WC at from 50 to 70 mass%, TiCN at from 15 to 30 mass%, at least one type of carbide, nitride, and carbonitride which includes W and one or more types out of metals of groups IV, V, and VI of the periodic table other than Ti at from 0 to 10 mass%, and at least one or more types of Co and Ni at from 6 to 12 mass%.

In addition, as illustrated in FIG. 5A and FIG. 5B, the cermet 20 is formed from a structure which contains a composite hard phase (seen as gray in the diagram, also referred to as a β phase) 22 formed from at least one type of carbide, nitride, and carbonitride which includes W, Ti, and at least one or more types out of metals of groups IV, V, and VI of the periodic table other than W and Ti, a WC phase 23 (seen as white in the diagram), and a binding phase 24 (seen as black in the diagram) which has at least one or more types of Co and Ni as a main part. Here, it is also possible for a part of the metals of groups IV, V, and VI of the periodic table other than WC to be present as one of carbide and nitride in addition to the carbonitride described above.

Then, according to the present embodiment, as illustrated in FIG. 5A to FIG. 5C, a surface portion 26 where the content ratio of the WC phase 23 is high compared to that of the internal portion of the cermet 20 is present on a surface side of the cermet 20. In the surface portion 26, the content ratio of at least one type of carbide, nitride, and carbonitride of the metals of groups IV, V, and VI of the periodic table other than WC is low compared to that of an internal portion 27 of the cermet 20. Furthermore, the average grain size of the WC phase in the surface portion 26 is larger than the average grain size of the WC phase 23 in the internal portion 27. Due to this, as a result of reducing plucking out in the WC phase 23 by lengthening (thickening) a mean free path between the WC phases 23 and 23 which is equivalent to the thickness of the binding phase 24 surrounding the WC phase 23 in the surface portion 26, it is possible to improve the fracture resistance in the surface of the cermet 20. As a result, it is possible to make a sharp blade edge 3c by eliminating chipping in the blade edge 2c of the cutting edge portion 2b during sharpening. Here, even in the surface portion 26, it is possible for a part of the metals of groups IV, V, and VI of the periodic table other than WC to be present as one of carbide and nitride in addition to the carbonitride described above.

In addition, as illustrated in FIG. 5A to FIG. 5C, a high hardness portion 28 where hardness is greater than the internal portion 27 of the cermet 20 is present directly under the surface portion 26. Due to this, it is possible to eliminate plastic deformation of the cermet 20 and the effect of improving the wear resistance is remarkable.

In other words, in the present embodiment, three regions of the surface portion 26, the high hardness portion 28, and the internal portion 27 are present in the cermet 20 from the surface thereof. Here, as is clear from FIG. 5A, the surface portion 26 and the high hardness portion 28 are clearly different in structure and the boundary therebetween is clear. In a case where the boundary between the surface portion 26 and the high hardness portion 28 is not clear, division is carried out by setting a region where the ratio taken up by the WC phase is 80 area% or greater of the total amount of the hard phase as the surface portion 26 and a region where the ratio taken up by the WC phase in the total amount of the hard phase is less than 80 area% as the high hardness portion 28. In addition, even in a case where the high hardness portion 28 is not present, the surface portion 26 and the internal portion 27 are clearly different in structure and the boundary therebetween is clear. In a case where the boundary between the surface portion 26 and the internal portion 27 is not clear, it is possible to clearly carry out the division by setting a region where the ratio taken up by the WC phase is 80 area% or greater of the total amount of the hard phase as the surface portion 26 and a region where the ratio taken up by the WC phase in the total amount of the hard phase is less than 80 area% as the internal portion 27.

On the other hand, in a case where the high hardness portion 28 is present, since the part between the high hardness portion 28 and the internal portion 27 continuously changes throughout the whole of the cermet 20, it is difficult to clearly determine the boundary by visual observation, and the boundary is determined from a result of a hardness distribution where the hardness of each measurement point is connected in FIG. 5C. That is, the internal portion 27 indicates a region where hardness does not change within a variation range in the hardness distribution and the boundary between the high hardness portion 28 and the internal portion 27 is a point where an intermediate value of a range of hardness variation in the internal portion 27 intersects with a hardness curved line of the high hardness portion 28. Here, when analyzing the characteristics of the composition, structure, or the like of the internal portion 27, the analysis is carried out at a position at a depth of 1000 µm from the surface of the cermet 20 which is far away from the boundary between the internal portion 27 and the high hardness portion 28.

Here, when the average grain size of the WC phase 23 in the surface portion 26 is from 1.1 to 1.5 times the average grain size of the WC phase 23 in the internal portion 27, it is possible to maintain the fracture resistance and the wear resistance of the cermet 20 in a more well-balanced manner. Here, in the present embodiment, the average grain size of the WC phase 23 in the internal portion 27 is from 1.5 to 4.0 µm and a particularly desirable average grain size is from 2.7 to 3.5 µm.

In addition, from the diagram of the Co distribution according to the wavelength dispersive X-ray spectrometry (WDS) in FIG. 6B, it is understood that Co is present at scattered points. Then, considering the data in FIG. 5A to FIG. 5C and FIG. 6A to FIG. 6C, it is understood that the content ratio of Co is the highest in the surface portion 26 (the ratio of white is high in the diagram), the content ratio of Co is next highest in the internal portion 27 (a side close to the high hardness portion 28 is indicated as the internal portion 27 in FIG. 6A to FIG. 6C), and the Co content ratio is low in the high hardness portion 8 (the ratio of white is small in FIG. 6B). In addition, when comparing the diagram of the Co distribution in FIG. 6B and the diagram of the N distribution in FIG. 6C, it is understood that a portion where the content ratio of Co is high, that is, the content ratio of N (nitrogen) is high at the position of the binding phase 24 (the ratio of white is high in FIG. 6C), the content ratio is next highest at the position of a composite hard phase 22, and the content ratio is low at the position of the WC phase 23 (the ratio of white is low in the diagram).

In other words, according to FIG. 6A to FIG. 6C, the content ratio of a binding phase which is contained in the surface portion 26 is greater than the content ratio of a binding phase which is contained in the internal portion 27, and the content ratio of nitrogen which is contained in the binding phase 24 in the surface portion 26 is greater than the content ratio of nitrogen which is contained in the WC phase 23. For this reason, the content ratio of nitrogen which is contained in the binding phase 24 of the surface portion 6 is greater than the content ratio of nitrogen which is contained in the binding phase 24 of the internal portion 27. As a result of eliminating plucking out in the WC phase 23 by improving the plastic deformation resistance of the binding phase 24 surrounding the WC phase 23 of the surface portion 26, it is possible to make a sharp blade edge by eliminating chipping in the blade edge 2c of the cutting edge portion 2b during sharpening. In addition, it is possible to improve the fracture resistance in the surface of the cermet 20.

Here, the internal portion 27 is formed from the same composition as the total composition of the cermet 20. The surface portion 26 is formed from a composition in which the content ratio of the WC phase 23 is high and the content ratio of the composite hard phase 22 is low, with respect to in the internal portion 27. The high hardness portion 28 is formed from a composition in which the content ratio of the composite hard phase 22 is high and the content ratio of the WC phase 23, Co, and nitrogen is low compared to the internal portion 27 and the surface portion 26.

In addition, in the present embodiment, the nitrogen content ratio in the surface portion 26 is 1.1 times or greater the nitrogen content ratio in the internal portion 27. Due to this, it is possible to maintain both the fracture resistance and wear resistance of the cermet 20 in a well-balanced manner. As a result, it is possible to eliminate chipping of the cutting edge portion 2 during sharpening and to form the blade edge 2c to be sharp, and it is also possible to eliminate the wear resistance and fracture resistance of the cutting edge portion 2. A desirable range for the content ratio of nitrogen in the surface portion 26 and the content ratio of nitrogen in the internal portion 27 is from 1.08 to 1.10.

Here, in the present embodiment, the thickness of the surface portion 26 is from 5 to 20 µm. Due to this, it is possible to improve the toughness in the blade edge 2c and also to eliminate plastic deformation in the surface of the cermet 20. In addition, when the surface portion 26 has this thickness, even when components in the cermet 20 form a chemical vapor deposition (CVD) film which will be described below on the surface of the cermet 20, it is possible to form a favorable CVD film on a surface of the cermet 20 by eliminating abnormal growth in a part of the constituent crystals. A particularly desirable thickness of the surface portion 26 is from 10 to 20 µm.

According to the present embodiment, the thickness of the high hardness portion 28 is from 30 to 200 µm, particularly desirably from 50 to 150 µm, and it is possible to improve the plastic deformation resistance of the cermet 20 and also to increase the wear resistance.

In addition, in the present embodiment, the Vickers hardness Hvd in the center of the surface portion 26 in the thickness direction is in a range of 0.8 to 1.0 times the average Vickers hardness Hvi in the internal portion 7, and a maximum value Hvh of the Vickers hardness of the high hardness portion 28 is in a range of 1.2 to 1.3 times the average Vickers hardness Hvi in the internal portion 27. It is possible to increase both the wear resistance and fracture resistance of the cermet 20 in this range.

Furthermore, in the present embodiment, as illustrated in the electron beam backscattering diffraction (EBSD) data in the vicinity of a surface of the cermet 20 in FIG. 7, even in the high hardness portion 28 directly under the surface portion 26, the average grain size of the composite hard phase 22 decreases from the surface toward the internal portion 27 (which is not illustrated in FIG. 7) and an effect is exhibited whereby the wear resistance is excellent as a result of increasing the hardness in the surface of the high hardness portion 28. Furthermore, in the present embodiment, the content ratio of the WC phase 23 is low and hardness of the high hardness portion 28 is high in the high hardness portion 28, with respect to the internal portion 27. Here, in the EBSD data in FIG. 7, the composite hard phase 22 is represented by white to grayish-white fine grains, the WC phase 23 is represented by dark gray fine grains, and the binding phase 24 is represented by black fine grains.

In addition, as desired, a coating layer may be formed on the surface of the cermet 20 described above by a chemical vapor deposition (CVD) method or a physical vapor deposition (PVD) method such as an ion plating method or a sputtering method. According to the cermet 20 described above, due to the presence of the surface portion 26, it is possible to eliminate quick chipping of the coating layer, and adhesiveness is also favorable. In particular, a CVD film is excellent in wear resistance with respect to high-speed cutting; however, due to the presence of the surface portion 26, it is possible to produce a coating layer formed from normal grains without the CVD film causing abnormal grain growth.

Here, as the formed cutter 2, it is also possible to adopt cermet where at least two of the characteristics in the first embodiment to the third embodiment described above are combined.

### (Formed Tool For Wood)

Since the formed tool for wood 1 of the present embodiment is configured by attaching a plurality of the formed cutters 2 of the present embodiment to the rotary holder 3, it is possible to increase the rotational frequency without requiring a large driving force by the plurality of attached formed cutters 2 being lightweight compared to a cemented carbide alloy or SKH material in the prior art, thus it is possible to increase the processing efficiency. In addition, since tears in a machined surface are eliminated since it is possible to carry out cutting at a high rotational frequency, it is possible to obtain favorable machined surface characteristics for long periods.

Next, description will be given of embodiments of a method for manufacturing cermet which configures formed cutters of each embodiment and of a method for manufacturing a formed tool.

### (Method for Manufacturing Cermet of First Embodiment)

Description will be given of a method for manufacturing the cermet of the first embodiment. At least one type of powder which is selected from TiC, TiN, and TiCN; at least one type of powder of carbide, nitride, and carbonitride which contain one or more types out of W, Mo, Ta, V, Zr, and Nb; Co powder; and Ni powder are prepared, and predetermined amounts of powder are weighed out and then mixed. Here, in order to set the content ratio of Ni in Co and Ni which are the binding phase to be from 25% or greater to 45% or less, the mass ratio of the Ni powder in the Co powder and Ni powder at the time of weighing may be set to from 25% or greater to 45% or less.

Then, a formed raw material is made by adding a binder to the mixed powder. Next, using the formed raw material, a predetermined plate shape is formed by a method known in the art such as press molding, extrusion molding, or injection molding and fired at a maximum temperature of 1400 to 1600°C. Then, it is possible to obtain the formed cutter 2 by forming the cutting edge portion 2b by grinding processing using a grinder. Here, in order to make the content ratio of Ni in the cutting edge portion 2b greater in the surface than in the inner portion, a thermal treatment may be carried out after immersing the cutting edge portion 2b into a Ni solution.

### (Method for Manufacturing Cermet of Second Embodiment)

Description will be given of a method for manufacturing the cermet of the second embodiment. Firstly, a mixed powder is adjusted by adding and mixing TiCN powder with an average grain size of 0.1 to 1.2 µm, in particular, of 0.3 to 0.9 µm; at least one type of carbide powder, nitride powder, and carbonitride powder of metals of groups IV, V, and VI of the periodic table other than TiCN; a predetermined amount of metal Co powder or metal Ni powder with an average grain size of 0.5 to 5 µm; at least one type of metal W powder and a WC₁₋ₓ (0<x≤1) powder with an average grain size of 2 to 10 µm; and carbon powder as desired.

In the present embodiment, as the at least one type of carbide powder, nitride powder, and carbonitride powder of metals of groups IV, V, and VI of the periodic table other than TiCN, it is possible to use TiN powder, WC powder, NbC powder, MoC, TaC powder, VC powder, or ZrC powder with an average grain size of 0.1 to 3 µm.

For the adjustment of the mixed powder, a binder, a solvent, or the like is added to the weighed raw material powder described above and mixed by a mixing method known in the art such as a ball milling, vibrating milling, jet milling, or attritor milling. An attritor milling is adopted in the present embodiment. The grain size of the raw material powder is decreased by grinding due to powder mixing in the attritor milling; however, there is a tendency for aggregation to occur due to the grinding instead since the at least one type of metal W powder and WC₁₋ₓ (0<x≤1) powder, the metal Co powder, and the metal Ni powder have high ductility. Then, the mixed powder is formed into a predetermined shape by a forming method known in the art such as press molding.

Next, the powder compact described above is fired in one of a vacuum and an inert gas atmosphere. According to the present embodiment, it is possible to produce a cemented carbide alloy of the predetermined structure described above by carrying out firing under the conditions below. As specific firing conditions, after (a) increasing a temperature from room temperature to 1200°C, (b) increasing the temperature from 1200°C to a firing temperature T₁ of 1330 to 1380°C in a vacuum at a temperature elevation rate of 0.1 to 2°C/min, (c) increasing the temperature from the firing temperature T₁ to a firing temperature T₂ of 1500 to 1600°C in one of a vacuum and an inert gas atmosphere of 30 to 2000 Pa at a temperature elevation rate b of 4 to 15°C/min, and (d) holding the firing temperature T₂ for from 0.5 to 2 hours in one of the vacuum and the inert gas atmosphere of 30 to 2000 Pa, firing is carried out under conditions where the temperature decreases.

By controlling the temperature increasing pattern and the timing for introducing a predetermined amount of inert gas during the firing described above, the at least one type of metal W powder and WC₁₋ₓ (0<x≤1) powder aggregated in the mixed powder forms an aggregated portion due to the other group IV, V, and VI elements being carbonized and nitrided while melting. In addition, the Co powder and Ni powder dissolve in each other while melting, surround the periphery of the hard phase, and make a bond between the hard phases. As a result, it is possible to produce the cermet 10 with the structure described above.

That is, when the temperature elevation rate in step (b) is slower than 0.1°C/min, the firing time is excessively long, which is not practical, and when the temperature elevation rate in step (b) is faster than 2°C/min, the firing of the aggregated metal Co powder and metal Ni powder does not proceed sufficiently and the sinterability of metal W powder is poor, thus making it difficult to form the aggregated portion 15. In addition, when the temperature elevation rate in step (c) is slower than 4°C/min, it is difficult to form the second hard phase where the content ratio of W in the center portion is high. When the temperature elevation rate in step (c) is faster than 15°C/min, it is difficult to form the aggregated portion 15 as the sinterability of the metal W powder is excessively high. When the firing temperature T₂ is less than 1500°C, it is difficult to form the second hard phase and, when the firing temperature T₂ is higher than 1600°C, the sinterability in the aggregated portion 15 is active and the aggregated portion 15 is one uniform hard phase.

### (Method for Manufacturing Cermet of Third Embodiment)

Description will be given of a method for manufacturing the cermet of the third embodiment. Firstly, a mixed raw material powder is produced in which the following are mixed: TiCN powder with an average grain size of 0.5 to 2.0 µm, desirably of 0.6 to 1.5 µm; WC powder with an average grain size of 0.5 to 5 µm; any one type of carbide powder, nitride powder, or carbonitride powder of other metals of groups IV, V, and VI of the periodic table described above with an average grain size of 0.1 to 2 µm; and at least one type of Co powder with an average grain size of 1.0 to 3.0 µm and Ni powder with an average grain size of 0.3 to 0.8 µm. Here, TiC powder or TiN powder may sometimes be added to the mixed raw material powder along with the TiCN powder; however, these raw material powders melt during firing and also constitute the TiCN in the composite hard phase after firing.

Next, using the mixed raw material powder described above, a predetermined shape is formed by a forming method known in the art such as press molding. Then, it is possible to produce the cermet with the predetermined structure described above by firing the powder compact described above under the conditions below. As an example of specific firing conditions, firing is carried out in steps of
(a) increasing the temperature to 1050°C to 1250°C,
(b) increasing the temperature to 1300°C to 1400°C in a vacuum atmosphere at a temperature elevation rate r₁ of 5 to 10°C/min, (c) increasing the temperature to a firing temperature T of 1500 to 1600°C in an atmosphere filled with 1000 to 3000 Pa of nitrogen (N) at a temperature elevation rate r₂ of 0.1 to 5°C/min,
(d) maintaining the above for from 0.5 to 1 hour in one of a vacuum atmosphere and an atmosphere filled with inert gas, and (e) cooling at a cooling rate of 3 to 15°C/min.

Here, when the atmosphere in step (b) is an inert gas atmosphere such as nitrogen (N), since a large quantity of gas is generated to remain in an alloy internal portion and become voids, there is a concern that, without being able to obtain a dense alloy, the toughness of the alloy will decrease. When the temperature elevation rate in step (b) is slower than 5°C/min, the decomposition of TiCN proceeds to the internal portion of the alloy and a surface portion is not formed, and when the temperature elevation rate in step (b) is faster than 10°C/min, it is not possible to obtain a dense sintered body since a large quantity of gas is generated in the alloy internal portion due to the decomposition of TiCN and voids remain therein. In addition, when the atmosphere in step (c) is a vacuum, the decomposition of TiCN proceeds excessively, the firing is excessive, abnormal grain growth is generated, and it is difficult to control the grain size of the WC phase 3. It is not practical for the temperature elevation rate in step (c) to be slower than 0.1 °C/min and when the temperature elevation rate in step (c) is faster than 5°C/min, the thickness of the surface portion is thin and the grain growth of the WC phase in the surface portion is not sufficient.

Here, in order to have a configuration where the content ratio of nitrogen in the binding phase of the surface portion is greater than the content ratio of nitrogen in the binding phase of the internal portion and the content ratio of nitrogen which is contained in the binding phase in the surface portion is greater than the content ratio of nitrogen which is contained in the composite hard phase, it is necessary to control the atmosphere during cooling in step (e) described above to be an atmosphere where nitrogen (N₂) is introduced so as to be in a pressurized state of 3000 to 10000 Pa, and, when the content of nitrogen (N₂) in step (e) is less than 3000 Pa, there is a tendency for the content ratio of nitrogen in the binding phase of the surface portion to be remarkably low compared to the content ratio of nitrogen in the binding phase of the internal portion. In addition, by setting the cooling rate after firing to from 5 to 12°C/min, it is possible to have a configuration where the average grain size of the composite hard phase decreases from the surface toward the internal portion in the high hardness portion.

### (Formed Tool For Wood)

In addition, the formed tool for wood of the present embodiment may be attached by producing a rotary holder provided with a plurality of attachment ports 4 and inserting the formed cutters 2 into each of the attachment ports 4.

Detailed description will be given below of embodiments of the present invention; however, the present invention is not limited to these embodiments. Working Example 1

Formed cutters formed with the outer shape illustrated in FIG. 1 and made of cermet, cemented carbide alloy, and SKH material were produced and sharpening was performed. With respect to the formed cutters after the sharpening, the sharpness of the blade edges was confirmed by metallurgical microscope observation. After confirming the number of chippings with a visual field of 300x magnification and carrying out confirmation for five visual fields, when the total number of chippings with a depth of 3 µm or greater was evaluated, 20 chippings were present. Here, the composition of the cermet was TiCN: 40 mass%, TiN: 10 mass%, WC: 20 mass%, NbC: 10 mass%, Co: 12 mass%, and Ni: 8 mass%. Then, a formed tool for wood was obtained by attaching 8 formed cutters to each rotary holder.

Then, cut processing was performed under processing conditions where a MDF material was cut and processed to 122 m, and rotational frequencies with the same driving force were compared and chippings in a blade edge which determines the machined surface characteristics were confirmed. As a result, it was possible to increase the rotational frequency the most for the formed cutter made of cermet compared to the formed cutters made of a cemented carbide alloy and made of SKH material.

In addition, it was confirmed that there were fewer tears in the machined surface of the MDF material cut using the formed cutter made of cermet and that the machined surface characteristics were extremely good compared to the formed cutters made of a cemented carbide alloy and made of SKH material. Furthermore, when a chipping state of the blade edge which determines the state of the machined surface of the MDF material was confirmed by the same evaluation method using a metallurgical microscope after the cut processing, the total number of chippings after processing finished was 40. Working Example 2

Next, by setting the mass ratio in the hard phase and the binding phase to be the same, samples where the added amounts of Co and Ni were different were produced and a fracture toughness K_{IC} and the Vickers hardness Hv was measured.

As the samples, samples where the content ratio of Ni in Co and Ni was 20%, 25%, 35%, 45%, and 50% were prepared. Here, the content ratio was obtained by grinding a part of the samples, measuring the Co and Ni using an ICP emission spectrophotometer (manufactured by Shimadzu Corporation: ICPS-8100) after dissolving the obtained powder in hydrochloric acid, and dividing the content of Ni by the sum of the content of Co and Ni.

Then, when the fracture toughness K_{IC} and the Vickers hardness Hv of each sample were measured, it was understood that the specific gravity of cermet was 8.0 g/cm³ or less, the fracture toughness K_{IC} was 8.5 MPa·m^{1/2} or greater, and the content range of Ni where the Vickers hardness in the internal portion of the cermet was 1500 or greater, that is, the content ratio of Ni which has high fracture resistance and is excellent in wear resistance, was from 25 to 45 mass%.

Working Example 3

Next, samples where the content ratios of Ni in the surface and in the inner portion of the cutting edge portion were different were produced and attached to rotary holders, cut processing for wood was performed in practice, and chipping confirmation was performed.

Up to the step of forming a cutting edge portion was the same for these samples, then one sample was left as is and the other sample was subjected to thermal treatment after immersing the cutting edge portion in a Ni solution. Then, when observation samples of the surface and the inner portion were prepared for each of the samples and observed using a scanning electron microscope (SEM) and count values obtained by an attached energy dispersive X-ray analyzer (EDS) were compared, significant differences were not seen in the surface and the inner portion in the one sample and, in the other sample, the surface contained more Ni than the inner portion.

Then, from the fact that chipping was generated later in the formed cutter of the other sample when the formed cutters of each sample were attached to each rotary holder and wood was processed under the same cut processing conditions as Example 1, it was understood that it is possible to further improve the fracture resistance by the content ratio of Ni in the cutting edge portion being greater in the surface than in the inner portion.

Here, the total number of chippings after the sharpening was 15 and the total number of chippings after the cut processing was 30. Working Example 4

Mixed powder which was adjusted at a ratio where TiCN powder with an average grain size of 0.6 µm was 43 mass%, WC powder with an average grain size of 1.1 µm was 7 mass%, TiN powder with an average grain size of 1.5 µm was 10 mass%, NbC powder with an average grain size of 1.5 µm was 11 mass%, ZrC powder with an average grain size of 1.8 µm was 1 mass%, VC powder with an average grain size of 1.0 µm was 2 mass%, W powder with an average grain size of 6 µm was 6 mass%, Ni powder with an average grain size of 2.4 µm was 10 mass%, and Co powder with an average grain size of 1.9 µm was 10 mass% was wet mixed in isopropyl alcohol (IPA) using a ball milling made of stainless steel and cemented carbide balls and 3 mass% of paraffin was added with respect to 100 mass% of the mixed powder and mixed by an attritor milling. After that, using granulated powder which was granulated by spray drying, press molding was carried out to the same shape as Example 1 at 200 MPa.

Then, after (a) increasing the temperature from room temperature to 1200°C, (b) increasing the temperature from 1200 to 1350°C in a vacuum at a temperature elevation rate of 0.7°C/min, (c) increasing the temperature from a firing temperature of 1350°C to 1575°C in an N₂ gas atmosphere of 1000 Pa at a temperature elevation rate b of 8°C/min, and (d) holding 1575°C for 1 hour in the N₂ gas atmosphere of 1000 Pa, firing was carried out under firing conditions when the temperature decreases.

Scanning electron microscope (SEM) observation was performed with regard to the obtained formed cutter, 5 randomly chosen places of a cross-section of the cermet were observed in a photograph (5000x), the type of each hard phase was specified by an electron probe microanalyser (EPMA), and it was confirmed that a first hard phase, a second hard phase, a third hard phase, a fourth hard phase, and an aggregated portion were present.

Then, image analysis was performed in an 8 µm x 8 µm region using commercially available image analysis software and measurement was carried out to confirm that an average grain size of the first hard phase was 0.35 µm, an average grain size of the second hard phase was 1.1 µm, an area ratio of the first hard phase (SA) in the visual field was 33 area%, an area ratio of the second hard phase (SB) was 34 area%, an area ratio of the third hard phase (SC) was 16 area%, an area ratio of the fourth hard phase (SD) was 3 area%, and an area ratio of a binding phase was 14 area%. The ratio (SB/SA) was 1.03.

In addition, when the carbon amount in the cermet was measured using a carbon analysis method with a cemented carbide alloy for which the carbon content is known as a reference sample, the carbon amount was 6.15 mass%. Furthermore, the specific gravity of the cermet was 6.4 g/cm³, the fracture toughness K_{IC} was 15.0 MPa·m^{1/2}, and the Vickers hardness in the internal portion of the cermet was 1500.

Next, when the number of chippings was confirmed after performing sharpening in the same manner as Example 1 using the obtained formed cutter, the total number of chippings was 5. In addition, when cut processing was carried out under the same processing conditions as Example 1 and the chipping state of a blade edge after processing was confirmed using a metallurgical microscope, the total number of chippings was 10. Working Example 5

Isopropyl alcohol (IPA) was added to a mixed powder prepared with a ratio where WC powder with an average grain size of 1.1 µm was 60 mass%, TiCN powder with an average grain size of 2.0 µm was 23 mass%, TaC powder with an average grain size of 2 µm was 2 mass%, NbC powder with an average grain size of 1.5 µm was 1 mass%, ZrC powder with an average grain size of 1.8 µm was 0.5 mass%, Ni powder with an average grain size of 2.4 µm was 5 mass%, and Co powder with an average grain size of 1.9 µm was 8.5 mass%, wet mixing was carried out using a ball milling made of stainless steel and cemented carbide balls, and, after 3 mass% of paraffin was added with respect to 100 mass% of the mixed powder and mixed, granules were made by a spray dryer.

Then, using the granules for molding, pressure was applied at 200 MPa to carry out press molding to the same shape as Example 1.

Furthermore, the powder compact was inserted into a firing furnace and firing was carried out under firing conditions by steps of (a) increasing the temperature to 1200°C at a temperature elevation rate of 10°C/min, (b) increasing the temperature to 1400°C in a vacuum atmosphere at the temperature elevation rate r₁ of 6°C/min, (c) increasing the temperature to 1550°C in an atmosphere which was filled with 2500 Pa of nitrogen (N₂) gas at the temperature elevation rate r₂ of 1.0°C/min and holding this state for 1 hour, and (d) cooling at a cooling rate of 10°C/min.

Scanning electron microscope (SEM) observation and electron beam backscattering diffraction (EBSD) measurement were performed in the vicinity of the surface of the obtained cermet, image analysis was performed in an 8 µm x 8 µm region using commercially available image analysis software at 5 randomly chosen places in each of the surface and the internal portion using a photograph (10000x), a state where a hard phase was present and the presence of a surface portion were confirmed, and the area ratios and average grain sizes thereof were calculated. Here, the area ratio was calculated by converting image data in one visual field of a photograph to gray scale, creating a brightness histogram based on the brightness of each dot, specifying the group with the highest brightness as the WC phase, the group with the next highest brightness as composite grains, and the group with the lowest brightness as a binding phase, and setting the ratio of the numbers of the dots as the area ratio. In addition, with regard to transitional regions between each of the groups, calculation was carried out by setting the brightness of the middle as a threshold value.

As a result, in the inner portion, cubic crystal grains, which were formed from a composite hard phase of carbonitride which includes W and Ti, Ta, Nb, and Zr, were 50 area%, WC grains were 35 area%, the average grain size of the WC grains was 2.8 µm, and the binding phase was 15 area%. In the surface portion, the cubic crystal grains were 2 area%, the WC grains were 83 area%, the average grain size of the WC grains was 2.1 µm, and the binding phase was 15 area%. In the high hardness portion, the cubic crystal grains were 60 area%, the WC grains were 30 area%, the average grain size of the WC particles was 2.7 µm, and the binding phase was 10 area%.

Furthermore, when the average grain size of the composite hard phase (cubic crystal grains) on the surface portion side and the internal portion side was measured in a region up to a depth of 20 µm from an interface of the surface portion of the high hardness portion and in a region up to a depth of 20 µm from an interface of the internal portion of the high hardness portion, the average grain size was 2.0 µm on the surface portion side of the high hardness portion and 1.0 µm on the internal portion side of the high hardness portion. Here, the average grain size was set as the average grain size of cubic crystal grains and the WC grains by specifying the cubic crystal grains and the WC grains on an SEM photograph in the surface portion, the high hardness portion, and the internal portion of the cermet, calculating the areas and obtaining the average values thereof, and estimating the diameter of a circle when converting the average area into a circle.

Here, the composition in the cermet after firing was the same as the composition described in the mixed raw material powder in Table 1 apart from TiN being changed to TiCN during the firing. That is, the WC content was the same as the WC content in the mixed raw material powder described above and the TiCN content was the same as the TiCN content in the mixed raw material powder described above. In addition, the carbonitride content of one or more types out of metals of groups IV, V, and VI of the periodic table other than W and Ti was the same as the total metal content of the other compounds in the mixed raw material powder described above; however, the content was all carbonitride. Furthermore, the content of Co and Ni was the same as the total content of Co and Ni in the mixed raw material powder described above.

In addition, in a state of obliquely polishing from the surface of cermet, the Vickers hardness was measured with a load of 50 g in each of positions corresponding to distances from the surface of the cermet and the distribution of the Vickers hardness was made into a graph as in FIG. 5C. When calculated from the graph, the Vickers hardness Hvd in the center of the thickness direction of the surface portion was 1420, the average Vickers hardness Hvi in the internal portion was 1550, and the maximum value Hvh of the Vickers hardness in the high hardness portion was 2000 GPa. Here, the average Vickers hardness Hvi in the internal portion was averaged by specifying a boundary position at the start of the internal portion from the distribution of the Vickers hardness and measuring 3 points at intervals of 20 µm from the boundary position.

Next, when the number of chippings was confirmed by performing sharpening in the same manner as Example 1 using the obtained formed cutter, the total number of chippings was 7. In addition, when cut processing was carried out under the same processing conditions as Example 1 and the chipping state of the blade edge after processing was confirmed using a metallurgical microscope, the total number of chippings was 13.

### Reference Number

- 1: Formed tool for wood
- 2: Formed cutter
- 2a: Base
- 2b: Cutting edge portion
- 3: Rotary holder
- 4: Attachment port

## Claims

1. A formed cutter formed from cermet having a hard phase and a binding phase, the formed cutter being a one-piece plate-shaped body including a cutting edge portion.

2. The formed cutter according to claim 1, wherein the formed cutter includes Co and Ni as the binding phase, and a content ratio of Ni with respect to a content of Co and Ni is from 25 to 45 mass%.

3. The formed cutter according to claim 1 or claim 2, wherein the content ratio of Ni with respect to the content of Co and Ni in the cutting edge portion is greater in a surface than in an inner portion.

4. The formed cutter according to any one of claims 1 to 3, wherein the cermet is formed from a binding phase which has at least one type of Co and Ni as a main part and a hard phase formed from one or more types of carbonitride out of metals of groups IV, V, and VI of a periodic table, the hard phase has a first hard phase formed from TiCN and a second hard phase formed from a composite carbonitride of Ti and one or more types out of metals of groups IV, V, and VI of the periodic table other than Ti, and where a content ratio of W in a center portion is greater than a content ratio of W in an outer peripheral portion, an average grain size of the first hard phase is from 0.05 to 1 µm, an average grain size of the second hard phase is from 0.2 to 3 µm and is greater than the average grain size of the first hard phase, the second hard phase is constituted by an aggregated portion formed with a grain size three times or greater the average grain size of the second hard phase, the aggregated portion is present in the cermet structure at a ratio of 20 to 60 area%, and a content ratio of carbon in the cermet is from 6.00 to 6.50 mass%.

5. The formed cutter according to claim 4, wherein a third hard phase is further present in the aggregated portion, the third hard phase being formed of a composite carbonitride of Ti and one or more types out of metals of groups IV, V, and VI of the periodic table other than Ti and where a content ratio of W in a center portion is identical to a content ratio of W in an outer peripheral portion.

6. The formed cutter according to claim 4 or 5, wherein a fourth hard phase is further present in a portion other than the aggregated portion, the fourth hard phase being formed from a cored portion formed from TiCN and peripheral portions formed from a composite carbonitride of Ti and one or more types out of metals of groups IV, V, and VI of the periodic table other than Ti.

7. The formed cutter according to any one of claims 1 to 6, wherein a surface portion where a content ratio of carbide, nitride, and carbonitride of metals of groups IV, V, and VI of the periodic table other than WC is lower than in an inner portion of the cermet is present in the cermet, and an average grain size of a WC phase in the surface portion is greater than an average grain size of a WC phase in the inner portion.

8. The formed cutter according to claim 7, wherein the average grain size of the WC phase in the surface portion is from 1.1 to 1.5 times the average grain size of the WC phase in the inner portion.

9. The formed cutter according to claim 7 or 8, wherein a thickness of the surface portion is from 5 to 20 µm.

10. The formed cutter according to any one of claims 7 to 9, wherein a high hardness portion where a hardness is greater than a hardness of the inner portion of the cermet is present directly under the surface portion.

11. The formed cutter according to claim 10, wherein a content ratio of the WC phase in the high hardness portion is lower than a content ratio of the WC phase in the inner portion.

12. The formed cutter according to any one of claims 7 to 11, wherein a Vickers hardness in a center of the surface portion in a thickness direction is from 0.8 to 1.0 times the average Vickers hardness in the inner portion.

13. The formed cutter according to any one of claims 10 to 13, wherein a maximum value of the Vickers hardness in the high hardness portion is from 1.2 to 1.3 times the average Vickers hardness in the inner portion.

14. A formed tool for wood configured by attaching a plurality of the formed cutters according to any one of claim 1 to claim 13 to a rotary holder.
